# FASCICULE DE BREVET EUROPEEN

(11) **EP 0 311 918 B1**
(45) Date de publication et mention de la délivrance du brevet: **07.01.1993**
(21) Numéro de dépôt: 88116614.4
(22) Date de dépôt: 07.10.1988
(51) Int. Cl.: B23H 7/10

(54) **Dispositif de préhension du fil-électrode d'une machine à électroérosion**
Drahtelektrodengreifvorrichtung für eine Elektroerosionsmaschine
Wire electrode gripping device for an electroerosion machine

(30) Priorité: 23.03.1988 CH 1102/88; 12.10.1987 CH 3981/87
(43) Date de publication de la demande: 19.04.1989
(73) Titulaire: CHARMILLES TECHNOLOGIES S.A., 1217 Meyrin 1 (CH)
(72) Inventeur: Gambin, Remi, F-74100 Vetraz-Monthoux (FR)
(74) Mandataire: Hugelin, Christiane

(56) Documents cités:
- EP-A- 0 227 843

## Description

La présente invention a trait à une machine EDM pour découper avec un fil-électrode, comportant un dispositif de préhension du fil-électrode agencé pour appliquer une tension mécanique à l'extrémité libre de ce fil (après avoir éliminé la partie déja utilisée ou traitée de ce fil), afin de la redresser pour faciliter son réenfilage, après une rupture accidentelle, à travers la pièce à usiner et/ou le guide-fil aval .

On sait qu'un des problèmes du découpage par électroérosion au moyen d'un fil-électrode défilant à travers deux guides fermés est la rupture accidentelle de ce fil dans la zone de travail située entre ces deux guides. Après une telle rupture, il est en effet nécessaire de réenfiler le fil dans son guide aval et, le cas échéant, à travers le passage étroit que le fil a pratiqué dans la pièce à usiner ou à travers l'avant-trou déja ménagé dans cette pièce lorsque la rupture intervient au cours de l'enfilage réalisé en début d'usinage. Ceci est difficile sans l'intervention d'un opérateur, vue l'étroitesse des orifices en question et la tendance naturelle du fil à prendre une forme courbe , cet opérateur devant redresser et allonger une certaine longueur de fil afin de diminuer son diamètre pour rendre possible le réenfilage. Or, une automatisation poussée de l'usinage au moyen d'un fil-électrode exige que le réenfilage du fil après rupture accidentelle soit automatique. A cet effet, la demande de brevet européen 201 773 propose un dispositif situé hors de la zone d'usinage et qui permet de maintenir le fil en exerçant sur lui une traction, de redresser son extrémité, de le trancher au début du segment rectiligne ainsi créé, et d'évacuer le déchet sectionné. C'est afin d'éviter toute interférence entre la pièce à usiner ou les brides servant à la maintenir et ce dispositif, qu'il est situé avant le guide-amont. Bien qu'avantageux lorsqu'il est prévu sur une machine dès sa conception, ce dispositif ne peut être facilement installé sur des machines déjà existantes ou dont certaines dimensions sont limitées, en particulier à cause de l'espace à prévoir pour déployer le segment à rectifier, dont la longueur est donnée, et qui doit se trouver en amont de l'organe de préhension, lui-même placé en amont du guide-fil amont.
Les demandes de brevets japonais publiées sous les numéros 56-82133 et 56-82134 décrivent un dispositif de réenfilage de conception différente qui fait appel à un guide cylindrique mobile verticalement afin d'entraîner l'extrémité du fil à travers la pièce à usiner. Un organe pivotable horizontalement entre une position de repos et une position de travail est fixé sur la tête d'usinage supérieure. Il est placé entre le guide (lorsque ce dernier est en position haute), et la pièce à usiner et permet de pincer le fil, de le couper et de laisser tomber l'extrémité sectionnée , avant qu'il ne réintègre sa position de repos. La demande de brevet japonaise, publiée sous le numéro 62-18291, décrit un guide -fil amovible en forme de pince, situé entre la tête d'usinage supérieure et la pièce à usiner. Cette "pince" (qui est un guide-fil et donc ne pince pas réellement le fil), a une grande envergure et est fixée sur un support vertical, lui-même fixé sur le bras portant la tête d'usinage supérieure. Un deuxième organe, apte à couper le fil, est placé entre la pièce à usiner et le guide aval. De même, la demande de brevet EP 227.843 décrit une pince amovible, mobile verticalement de manière à venir contacter la tête supérieure et présentant une buse destinée à prolonger celle de la tête et à faciliter l'enfilage, à travers la fente usinée dans la pièce et le guide-fil inférieur, du fil transporté par un jet de liquide. Selon certaines variantes, on peut étirer le fil et le chauffer afin de le redresser et / ou couper l'extrémité endommagée suite à une rupture accidentelle. Ces deux types de dispositifs présentent plusieurs inconvénients. Ainsi, bien que le mouvement latéral de l'organe pivotable obtenu par rotation d'un bras porteur (premier type), ou l'ouverture de la "pince" (deuxième type), fasse sortir ces organes de la zone d'usinage proprement dite, il ne modifie ni la hauteur ni la position de leurs supports. Il en résulte un encombrement, une réduction de l'accessibilité et de la visibilité dans la zone d'usinage, ce qui augmente d'autant les risques de collision entre la pièce à usiner, (ou les brides qui la maintiennent), et l'organe préhensile ou son bras porteur. De telles collisions restent donc possibles pendant l'usinage, en particulier lorsque la surface supérieure de la pièce n'est pas horizontale, et ne peuvent être évitées que par un système de commande électronique tenant compte de la forme exacte de la pièce ainsi que des brides, ou encore par un retrait vers le haut de l'organe préhensile et de son support. De plus, le premier dispositif est exagérément compliquée et exige un moteur d'actionnement ainsi que des organes mécaniques annexes qui sont à la fois chers et encombrants. Le second ne comporte aucun organe permettant d'exercer une traction sur le fil et la hauteur du support de la "pince" doit être réglée en fonction de la position de la tête d'usinage supérieure. De plus, aucun de ces dispositifs ne comporte une évacuation des bouts de fils sectionnés hors du bac d'usinage.

Le but de l'invention est d' éviter ces inconvénients en proposant un dispositif
- placé entre le guide-fil amont et la pièce à usiner,
- mobile de manière à se placer dans une position de repos évitant toute collision avec les organes placés dans le bac,
- facilement adaptable aux machines EDM existantes ,
- ne nécessitant aucun organe supplémentaire, tel un moteur d'actionnement,
- permettant d'exercer une traction suffisante sur le fil pour le redresser et l'étirer. En effet, le redressage et l'étirage des fils-électrodes utilisés en EDM, tels les fils de cuivre zingués d'un diamètre de 0,25mm ou plus, nécessitent une force de traction importante, par exemple de l'ordre de 15 à 20 N. Cela exige l'utilisation d'une pince puissante et donc de grande dimension.

Un autre but de la présente invention est d'évacuer hors de la zone d'usinage, en particulier hors du bac d'usinage, les bouts de fil usagés. Ceci est réalisé grâce au dispositif selon la présente invention tel que défini à la revendication 1.

Avec le mode de réalisation préféré du dispositif selon l'invention, dans lequel le moyen pour éliminer les segments de fil ayant déjà été usinés ou redressés est constitué par un cabestan, il n'est plus nécessaire d'utiliser une pince puissante et donc de grande dimension, car grâce au cabestan, une force de traction de l'ordre de quelques centaines de grammes seulement,, est suffisante pour maintenir le fil en l'empéchant de glisser d'entre les machoires de la pince. Ces dernières n'ont plus à être rainurées. L'utilisation de machoires lisses et d'une force de pression sur le fil beaucoup plus faible qu'en l'absence de cabestan, diminuent énormément les risques de couper le fil pendant son étirage et son redressement.

Un autre avantage du dispositif selon l'invention est que tous les mouvements nécessaires, (sauf l'actionnement du moyen de saisie du fil), peuvent être effectués à l'aide des seuls moyens déja présents sur la machine EDM, et servant normalement aux déplacements selon les axes X, Y et Z effectués lors de l'usinage. La précision de ces moyens qui préexistent sur pratiquement toutes les machines à électroérosion par fil, est en effet plus que suffisante pour positionner le dispositif selon la présente invention et pour son fonctionnement, en particulier pour enrouler le fil usagé autour du cabestan, ce qui rend son installation donc très économique.

L'invention sera maintenant illustrée par la description d'un mode d'exécution et à l'aide du dessin, dans lequel
- la figure 1 est une coupe schématique d'une machine à érosion par fil, munie d'un dispositif selon l'invention,
- la figure 2 représente la machine de la figure 1 avec une position différente de certaines organes, et
- les figures 3a, 3b, 3c et 3d représentent des vues plus détaillées de la pince et de son bras porteur.

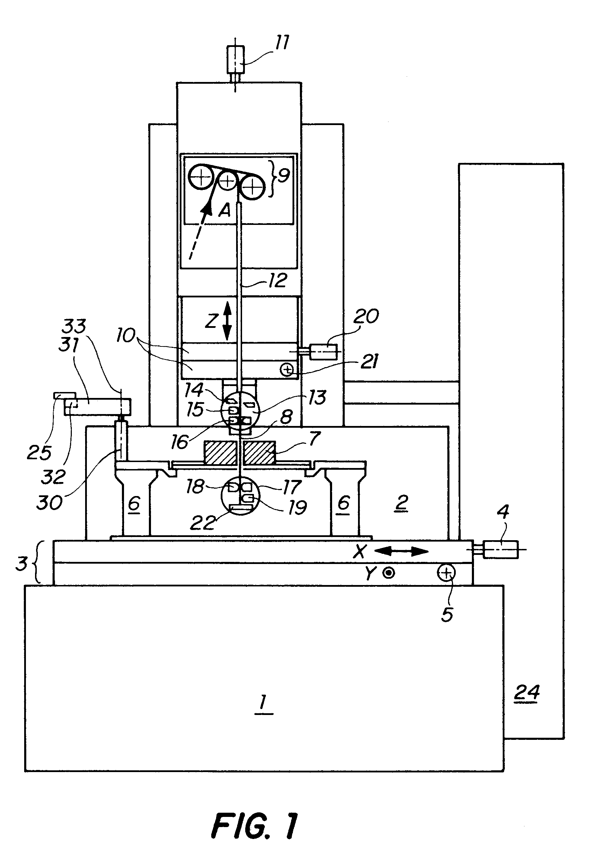

La figure 1 montre une coupe schématique d'une machine à éroder par fil-électrode munie d'un dispositif selon l'invention. Le chiffre 1 désigne le bâti de la machine, qui porte le bac d'usinage (2) par l'intermédiaire d'une table à mouvements croisés (3), permettant de mouvoir le bac dans deux directions orthogonales X et Y, au moyen des moteurs (4) et (5). Dans le bac (2) un support (6) porte la pièce à usiner (7).

L'usinage est effectué au moyen d'un fil-électrode( 8) défilant de façon continue et de haut en bas à travers la pièce (7). L'alimentation en fil se fait de manière connue dans le sens de la flèche à partir d'une bobine (non représentée), et au moyen d'un moteur-frein et d'un mécanisme d'entraînement (9) à courroie et poulies. Ensuite le fil traverse un tube vertical (12) pour atteindre la tête d'usinage supérieur(13) qui est montrée de manière à la fois agrandie et schématisée dans le dessin. Cette tête comporte une cisaille (14), un contact d'amenée de courant (15) et un guide-fil amont (16). L'ensemble constitué par la tête d'usinage supérieure (13), le tube (12) et l'unité (9) peut être déplacé verticalement au moyen d'un moteur (11), c'est-à-dire dans la direction Z orthogonale au plan X - Y de la table (3) à mouvements croisés. De plus, une seconde table à mouvements croisés (10) actionnée par des moteurs (20) et (21) permet le déplacement de la tête supérieure et du tube dans un plan parallèle au plan X - Y , mais avec un mouvement de plus faible amplitude, pour incliner le fil dans la zone d'usinage.

Après être passé par le guide-fil (16), le fil traverse la pièce à usiner (7), puis un guide-fil aval (18) placé dans la tête d'usinage inférieure (17) qui est représentée au dessin de manière analogue à la tête supérieure (13). Le fil s'engage ensuite dans un mécanisme d'entraînement (22) qui n'est qu'esquissé dans le dessin. Ce mécanisme fait avancer le fil de manière quelque peu analogue à l'unité (9) et l'évacue vers un conteneur à déchets, non représenté.

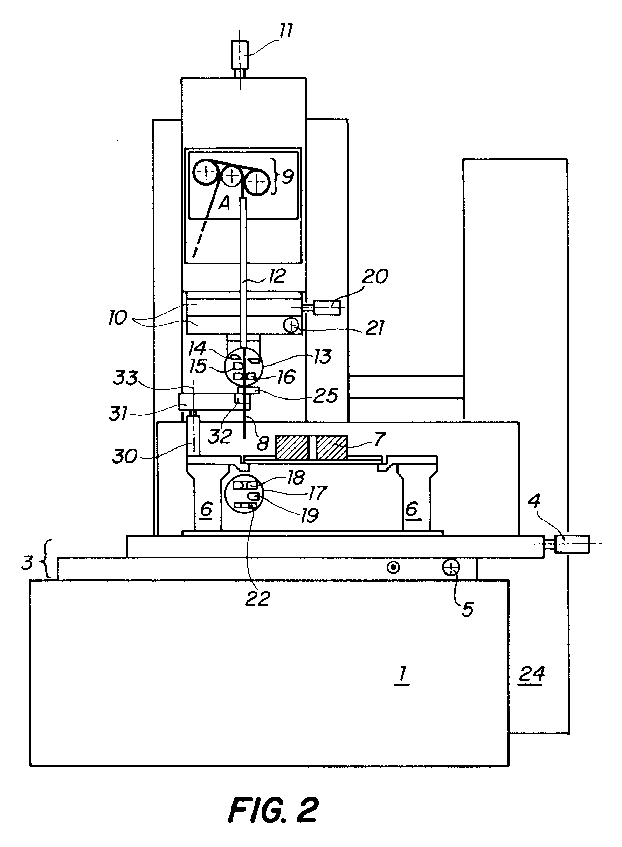

Le socle (30) fixé sur le support (6) porte un bras (31) pouvant pivoter autour d'un axe (33) perpendiculaire au plan XY. A son extrémité libre ce bras porte une pince (32) et un cabestan (25) qui ne sont que sommairement indiqués à la figure 1. La rotation du bras ainsi que l'ouverture et la fermeture de la pince sont effectuées par des vérins hydrauliques ou pneumatiques, non représentés à la figure 1. L'ensemble des moteurs ainsi que les unités d'actionnement électriques et hydrauliques sont commandés par une unité de commande numérique de type connu et programmée grâce à un logiciel approprié, logée dans une armoire (24). Le fonctionnement du dispositif selon l'invention sera maintenant décrit plus en détail
Lorsque le fil (8) casse en cours d'usinage ,la machine à éroder se trouvera dans la position de la figure 1 au moment de la rupture. Le point de rupture (non représenté à la figure 1) sera situé dans la zone d'usinage, en aval du guide-fil amont (16); la rupture elle-même peut être détectée de diverses manières connues, par exemple en surveillant la résistance électrique du fil entre les contacts (15) et (19), ou encore la résistance électrique entre le fil et la pièce à usiner, ou grâce à des capteurs mesurant la vitesse du fil, situés par exemple sur le mécanisme d'entrâinement 9 du fil, etc... Dès que l'unité de commande détecte une rupture, l'usinage et l'avance du fil sont interrompus tandis que la partie du fil en aval du point de rupture est évacuée par le mécanisme d'entraînement (22). La tête supérieure (13) est ensuite déplacée vers le haut sous l'action du moteur (11) jusqu'à ce qu'elle se trouve plus haut que le bras (31). Ensuite, une marche arrière du mécanisme d'entraînement 9 permet d'amener l'extrémité du fil à 1 cm environ en dessous de la sortie de la tête (13) en remontant la partie du fil en amont du point de rupture jusqu'à ce qu'elle ne soit plus engagée dans la pièce (7) à usiner. A cet effet , on mesure, par exemple, la résistance électrique entre fil et pièce, résistance qui augmentera brusquement lorsque le fil sort de la pièce et ne touche donc plus celle-ci. Puis, les moteurs (4) et (5), ainsi qu'un vérin hydraulique contrôlant la rotation du bras (31), sont actionnés, simultanément ou successivement, pour amener la pince (32) en regard du guide-fil (16), dans la position indiquée à la figure 2. Il est à noter que dans cette figure la partie du fil en aval du point de rupture a déjà été évacuée, et que la position du bras (31) diffère de 180° dans les figures 1 et 2. Evidemment d'autres angles sont possibles entre les deux positions désirées.

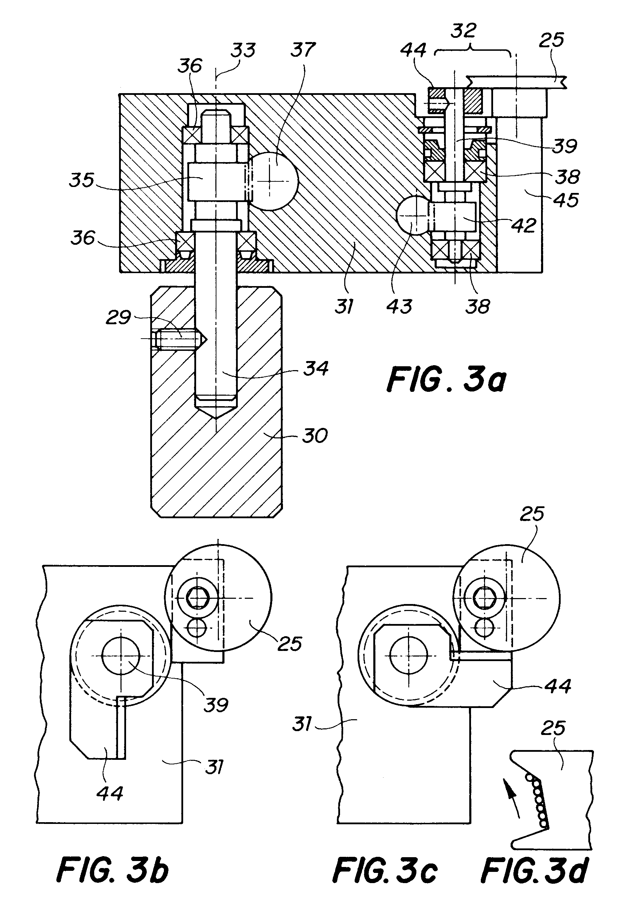

A ce moment, la pince (32) saisit l'extrémité libre du fil. On actionne alors les moteurs (20) et (21) de manière à enrouler une certaine longueur de fil autour du cabestan (25). Cette longueur de fil est telle que tout le fil situé après le point A situé en amont du tube (12), c'est-à-dire la partie de fil qui traverse le tube (12) et la tête (13), est maintenant après les cisailles (14) et sera donc éliminée. Le cabestan (25) est de préférence profilé comme indiqué à la figure 3d; la forme de la gorge périphérique permet aux spires du fil de s'empiler les unes sur les autres sans se chevaucher et de s'éjecter par un effet de ressort dès l'ouverture de la pince. Une marche arrière du mécanisme d'entraînement (9), accompagnée éventuellement d'un chauffage (en général par effet Joule) de la partie du fil située à l'intérieur du tube (12), permet de redresser le segment de fil situé en amont de la pince (32), entre le point A et les cisailles (14), en exerçant sur lui une traction accompagnée d'un chauffage. Si désiré, ce dispositif peut écrouir et amincir uniformément ce segment en vue de faciliter son enfilage. La portion de fil ainsi redressée est du fil neuf, qui n'a jamais servi pour l'usinage et n'a été ni étiré, ni écroui précédemment. En particulier dans le cas de ruptures en cours d'enfilage, ce dispositif permet d'éviter qu'un même segment de fil soit soumis à plusieurs tractions et éventuellement à plusiers chauffages successifs. Le fil est ensuite sectionné à la sortie du tube (12) par la cisaille (14). Le déchet sectionné peut être évacué en faisant d'abord tourner le bras (31) de 180° pour l'orienter à nouveau comme sur la figure 1 et en ouvrant la pince; le déchet s'éjecte alors automatiquement du cabestan sous un effet de ressort, dès qu'il n'est plus pincé entre les machoires de la pince, et vient tomber hors du bac (2). Les moteurs (4),(5) et (11) sont ensuite actionnés pour ramener la tête d'usinage supérieure (13) dans sa position de travail au-dessus et à proximité de la pièce (7), et un mouvement d'avance de l'unité d'entraînement (9) permettra alors d'enfiler la partie rectifiée et éventuellement amincie et écrouie du fil à travers le guide-fil amont (16), la pièce (7) et le guide-fil aval (18) jusqu'au mécanisme d'entraînement (22). Celui-ci est agencé de manière connue pour saisir l'extrémité libre du fil et faire ensuite avancer celui-ci à la vitesse exigée par l'usinage, usinage qui peut alors reprendre normalement. Evidemment, la suite des opérations décrites ici sera en général commandée automatiquement par un programme mémorisé dans l'unité de commande numérique logée dans l'armoire (24).

Les figures 3a, 3b, 3c et 3d représentent deux vues en coupe verticale et deux vues en plan simplifiées de l'un des modes de réalisation possible pour le cabestan (25), la pince (32), leur bras (31) et son socle (30). Ce dernier porte un arbre (34) fixé par une vis (29) et sur lequel est serti un pignon (35). Le bras (31) est monté sur l'arbre (34) par l'intermédiaire de roulements (36). Un vérin hydraulique ou pneumatique (37), muni d'une crémaillère engagée sur le pignon (35), permet de faire pivoter le bras (31) autour de l'arbre (34). A son extrémité opposée au vérin (37,) le bras (31) porte, par l'intermédiaire de roulements (38), un second arbre (39) muni d'un second pignon (42), sur lequel agit la crémaillère d'un second vérin (43). Un mors (44) est bloqué sur l'arbre (39) de manière à venir s'appliquer contre un second mors (45) sous l'action du vérin (43) sur le pignon (42). Les deux mors forment ainsi la pince (32) placée à l'extrémité libre du bras (31) pour effectuer les opérations décrites plus haut.

Il est à remarquer que la rotation du bras (31) autour de l'axe (33), bien que commode en pratique, n'est pas nécessaire pour amener la pince (32) au-dessous et à proximité immédiate de la tête d'usinage (13). Si le rayon d'action de la table à mouvements croisés (3) est assez grand, les mouvements obtenus au moyen des moteurs (4), (5) et (11) suffisent à cet effet. Or, ces trois moteurs sont pratiquement nécessaires sur toute machine à électroérosion par fil, ce qui réduit d'autant les frais supplémentaires occasionnés par l'installation de la pince. De préférence, le bras (31) est fixé au-dessus du niveau du guide-fil amont (16) lorsque la tête (13) est rétractée vers le haut, mais au-dessus de la hauteur maximum de la pièce (7) et de ses brides de fixation (non représentées). De cette manière le socle, le bras et la pince ne pourront en aucun cas entrer en collision avec la pièce à usiner ou les brides (non représentées) qui la maintiennent. Ceci simplifie la programmation des opérations de réenfilage car il n'est plus nécessaire de tenir compte de la forme exacte de la pièce à usiner, qui varie d'une fois à l'autre. Il est à noter que la pince n'est pas nécessairement située au-dessus du bord supérieur du bac ou fixée sur le support (6) de la pièce à usiner, comme cela est représenté au dessin pour plus de clarté. Elle pourrait, par exemple, être fixée sur les parois du bac (2).
La forme d'exécution de l'invention décrite ici, qui outre un redressement et un réenfilage automatique du fil après rupture accidentelle permet aussi de ne préparer au réenfilage que des segments de fil neuf et d'évacuer les portions de fil inutilisables, est de plus suffisamment simple et peu encombrante pour être facilement adaptable sur des machines préexistantes.

## Revendications

1. Machine EDM pour découper avec un fil électrode (8) défilant dans deux guides-fil (16,18), entre lesquels est monté la pièce (7) à usiner, depuis un mécanisme d'alimentation (9) pouvant entrainer ce fil (8) en marche avant vers cette dernière ainsi qu'en marche arrière et pour le réenfiler en cours d'usinage à travers ces guides (16,18) et cette pièce (7) , comportant une table à mouvements croisés (3) actionnée par une commande numérique pour mouvoir relativement cette pièce(7) et ce fil (8) selon la trajectoire à découper dans la pièce (7), un couteau (14) pour sectionner le fil (8) ainsi qu'un dispositif (31, 32) mobile autour d'un axe vertical (33), disposé en position de travail sous le guide-fil amont (14), et hors de la zone d'usinage en position de repos, destiné à saisir l'extrémité libre du fil (8) et à le tendre mécaniquement en coopérant avec le mécanisme d'alimentation (9) et à éliminer le segment de fil sectionné avant réenfilage, caractérisée par le fait que
- les deux guides (16, 18) sont des guides fermés,
- le couteau (14) est disposé dans la tête d'usinage supérieure (13),
- une station (12) de rectification du fil (8) est montée entre cette tête (13) et le mécanisme d'alimentation (9) et
- le dispositif mobile (31, 32) est monté sur la table à mouvements croisés (3) et comporte un premier organe (25) coopérant avec d'autres organes rotatifs reliés à la commande numérique et actionnés par elle pour enrouler autour de ce premier organe (25) l'extrémité de fil (8) qui s'étend jusqu'au mécanisme d'alimentation (9) avant qu'elle ne commande la rectification du fil (8), ainsi que des moyens (35, 37) actionnés par la commande numérique pour le ramener en position de repos avant que celle-ci ne commande le sectionnement du fil (8) et le réenfilage,
l'amplitude des mouvements de la table (3) étant suffisante pour amener ce dispositif (31,32) en position de travail.

2. Machine selon la revendication 1, dans laquelle le pivotement du dispositif mobile (31, 32) est réalisé par action d'un vérin (37) hydraulique ou pneumatique.

3. Machine selon la revendication 1, dans laquelle le dispositif mobile comporte une pince (32)

4. Machine selon la revendication 3, dans laquelle l'ouverture et la fermeture de la pince sont actionnées par un vérin (43) hydraulique ou pneumatique.

5. Machine selon la revendication 4, dans laquelle le premier organe est un cabestan (25) monté sur l'une des machoires de la pince (32) et coopérant avec une table à mouvements croisés (10,20,21) montée au-dessus de la tête supérieure (13).

6. Machine selon la revendication 5, dans laquelle le cabestan (25) comporte une gorge périphérique profilée de façon à ce que les spires du fil (8) viennent s'empiler sans se chevaucher et s'éjectent dès l'ouverture de la pince (32).

7. Machine selon la revendication 1, comportant également un détecteur pour envoyer un signal à la commande numérique dés que la partie du fil (8) en amont du point de rupture n'est plus engagée dans la pièce (7).

## Claims

1. EDM machine for cutting with a wire electrode (8) unwinding, two wire guides (16,18), having the workpiece (7) to be machined mounted between them and from a feeding mechanism (9) able to draw said wire (8) ahead, towards said piece (7) as well as in back motion, ant to rethread it during machining through said guides (16, 18) and said piece (7), comprising a cross-slides table (3) driven by a numerical unit to be moving relatively to said piece (7) and said wire (8) according to the path to be cut in said piece (7), a knife (14) for cutting off the wire (8) as well as a device (31, 32) mobile around a vertical axis (33) and located in work position under the upstream wire-guide (14) and in rest position out of the machine zone, fitted to grip the free end of the wire (8) to apply to it a tightening mechanical stress by cooperating with said feeding mechanism and to eliminate the section of the wire cut off before the rethreading step, caracterised by the fact that
- the two guides (16, 18) are closed guides,
- the knife (14) is located in the upper machining head (13),
- a straightening station (12) for the wire (8) is mounted between said head (13) and the feeding mechanism and
- the mobile device (31, 32) is mounted on the cross-slides table (3) and comprises a first component (25) cooperating with further rotating components connected to the numerical command unit and operated by it for winding around said first component the end of the wire (8) which extends up to said feeding mechanism (9), before to drive the straightening of the wire (8) as well as means (35, 37) operated by the numerical command unit for bringing back said first component (25) in a rest position before to drive the cutting of the wire (8) and the rethreading, whereas the amplitude of the motions of said table (3) are large enough for bringing said mobile device (31, 32) in work position.

2. Machine according to claim 1, in which the pivoting of the mobile device (31, 32) is obtained by the action of a pneumatic or hydraulic actuator (37).

3. Machine according to claim 1, in which the mobile device comprises a clamp (32).

4. Machine according to claim 3, in which the opening and closing of the clamp are operated by an hydraulic or pneumatic actuator (43).

5. Machine according to claim 4, in which the first component is a capstan (25) mounted on one of the jaws of the clamp (32) and cooperating with a cross-slides table (10, 20, 21) mounted upstream of the upper machining head (13).

6. Machine according to claim 56, in which the capstan (25) comprises a circumferential groove shaped in such a way that the turns of the wire (8) are wound on without overlapping and eject themselves on opening of the clamp(32).

7. Machine according to claim 1, comprising also a detector for sending a signal to the numerical command unit as soon as the part of the wire 88) extending upstram of the breaking point is no more engaged in the piece (7).

## Patentansprüche

1. EDM-Maschine zum Schneiden mit einer Drahtelektrode (8), die sich in zwei Drahtführungen (16,18), zwischen welche das zu bearbeitende Werkstück (7) aufgestellt ist, durchbewegt , von einer Zufuhrvorrichtung (9) ausgehend, die diesen Draht (8) vorwärts nach diesem Stück (7) und rückwärts in Bewegung setzt, und zur im Verarbeitungsgang Wiedereinfädelung dieses Drahtes (8) durch diese Drahtführungen (16,18) und dieses Stück (7), die einen, von einer numerischen Steuerung betätigten Kreuztisch (3) zur relativen Bewegung dieses Stückes (7) und und dieses Drahtes (8) gemäss der im Stück (7) zu schneidenden Strecke, ein Messer (14) zum Durchschneiden dieses Drahtes (8), ebenso wie eine, um einer vertikalen Achse (33) bewegbare, in Arbeitstellung unter der oberen Drahtführung (14) und in Ruhestellung ausser dem Arbeitsgebiet stehende Vorrichtung (31,32) aufweist, zum Ergreifen des freien Endes des Drahtes (8), zum mekanischen Spannen dieses Drahtes (8) bei Mitwirkung der Zufuhrvorrichtung (9) und zur Beseitigung des abgeschnittenen Drahtsegmentes vor Wiedereinfädelung, dadurch gekennzeichnet, dass
- beide Drahtführungen (16,18) geschlossene Führungen sind,
- das Messer (14) im oberen Arbeitskopf (13) eingerichtet ist,
- eine Drahtbegradigungstelle (12) zwischen Kopf (13) und Zufuhrvorrichtung (9) angeordnet ist, und dass
- die bewegbare Vorrichtung (31,32) auf dem Kreuztisch (3) montiert ist und einen ersten, mit anderen an der numerischen Steuerung geschaltenen rotierenden Bauteilen mitwirkenden Teil (259 aufweist, wobei diese rotierenden Bauteile durch die numerische Steuerung zum Aufrollen des sich bis der Zufuhrvorrichtung (9) erstreckenden Endes des Drahtes (8) um diesem ersten Teil (25) betätigt sind, bevor dass diese Steuerung die Begradigung des Drahtes (8) antreibt, sowie durch die numerische Steuerung betätigte Mitteln (35,37) um diese bewegbare Vorrichtung (31,32) in Ruhestellung zurückzubringen bevor dass diese Steuerung das Durchschneiden des Drahtes (8) und die Wiedereinfädelung antriebt,
wobei die Bewegungsweite des Tisches (3), genügen um diese bewegbare Vorrichtung (31,32) in Arbeitstellung zu bringen.

2. Maschine gemäss Anspruch 1, in welcher die Schwenkung der bewegbaren Vorrichtung (31,32) durch einen hydraulischen oder pneumatischen Kraftzylinder (31) verwirklicht wird.

3. Maschine gemäss Anspruch 1, in welcher die bewegbare Vorrichtung eine Zange (32) aufweist.

4. Maschine gemäss Anspruch 3, in welcher die Oeffnung und das Zuschliessen der Zange von einem hydraulischen oder pneumatischen Kraftzylinder (43) betätigt wird.

5. Maschine gemäss Anspruch 4, in welcher der erste Teil eine Windevorrichtung (25) ist, die auf einer der Backen der Zange (32) montiert ist und mit einem, über dem Arbeitskopf (13) montierten Kreuztisch (10, 20, 21) mitwirkt.

6. Maschine gemäss Anspruch 5, in welcher die Windevorrichtung (25) eine Umkreisrille aufweist, die so profiliert ist, dass die Windungen des Drahtes (8) sich aufschichten ohne übereinander zu greifen und schleudern heraus sobald die Zange (32) aufgeht.

7. Maschine gemäss Anspruch 1, die ebenfalls ein Detektor aufweist, zur Sendung eines Signals in Richtung der numerischen Steuerung sobald der Teil des Drahtes (8) oberhalb des Bruchpunktes nicht mehr im Stück (7) engagiert ist.
